# EUROPEAN PATENT SPECIFICATION

(11) **EP 4 010 301 B1**
(45) Date of publication and mention of the grant of the patent: **08.01.2025**
(21) Application number: 20753785.3
(22) Date of filing: 14.08.2020
(51) Int. Cl.: C04B 40/02

(54) **A PROCESS FOR A CARBONATED COMPOSITE**
EIN PROZESS FÜR EINEN KOHLENSTOFFHALTIGEN VERBUNDWERKSTOFF
UN PROCÉDÉ POUR UN COMPOSITE CARBONATÉ

(30) Priority: 15.08.2019 NL 2023648
(43) Date of publication of application: 15.06.2022
(73) Proprietor: CRH Group Services Limited, D02 R279 Dublin 2 (IE)
(72) Inventor: KEULEN, Arno, 1083 HL Amsterdam (NL); SANTAMARIA RAZO, Diego A., 1083 HL Amsterdam (NL)
(74) Representative: Slingsby Partners LLP
(86) International application number: PCT/EP2020/072906
(87) International publication number: WO 2021/028581

(56) References cited:
- WO-A1-2018/102931
- WO-A1-2019/115722
- JP-A- 2008 030 974
- US-A- 4 069 063
- US-A1- 2015 232 381

## Description

The present invention relates to a process for producing a composite. Further, the present invention relates to the manufacture of construction materials.

### BACKGROUND TO THE INVENTION

The increasing concentration of carbon dioxide in the atmosphere, and its effect on the global climate is a cause for concern. Among the biggest contributors of carbon dioxide to the atmosphere is the burning of fuels for power generation, and industrial activity such as the production of steel, cement and lime. Carbon dioxide is emitted in the flue gases from such industrial plants. There is a growing pressure on these industries to reduce their carbon emissions, with an increasing number of governments implementing legislation directed to the reduction of carbon emissions.

The environmental impact of disposing of particulate waste in landfill sites is also a cause for concern. The disposal of particulate waste in landfill sites not only takes up landfill space that is quickly running out, but there is also potential for harmful or even toxic components of the particulate material leaching into the soil and groundwater. Further, there is potential of releasing particulate pollution into the atmosphere. Exposure to atmospheric particulate pollution has been associated with adverse respiratory symptoms such as coughing, aggravated airways and has even been linked with lung cancer and chronic bronchitis. Particulate waste can come from a number of sources, including but not limited to agriculture, construction, industry by-products such as metal production and power plants.

Concrete, in particular prefabricated concrete composites, are widely used in the construction industry. They may be used as building blocks, walls, flooring, paving, road barriers, elements for constructing houses, bridges and infrastructure and in addition to provide various unique functions such as flood protection, such as seawalls. Applications of the concrete composites need to be able to withstand a wide variety of conditions in corrosive environments, such as due to de-icing salt, rain, sunshine, heat, frost, natural carbonation, seawater and acidic environments. The degradation of concrete, such as of seawalls reduces the effectiveness of these barriers and requires replacement which is costly from an environmental point of view as well as from a construction point of view.

US patent application number US 2015/232381 A1 discloses an invention that provides compositions and methods directed to carbonation of a cement mix during mixing. The carbonation may be controlled by one or more feedback mechanisms to adjust carbon dioxide delivery based on one or more characteristics of the mix or other aspects of the mixing operation.

There is a need for processes that reduce industrial carbon emissions. Further, there is a need for processes that can use carbon emissions in the manufacture of different products. Further, there is a need for processes that trap carbon emissions and prevent them from entering the atmosphere. Further, there is a need for carbon neutral processes in industry. There is a need for improved processing of waste materials and secondary materials (organic and inorganic). Further, there is a need for products that make new uses of waste materials, by-products and secondary materials. Further, there is a need for products that can utilise carbon dioxide in their manufacture. Further there is a need for improved concrete composites which are sustainable and durable. In particular, there is a need for improved materials for corrosive environments, such as due to de-icing salt, rain, sunshine, wind, heat, frost, acids, natural carbonation and seawater. There is a need for concrete composites with improved chemical resistance and durability. There is a need for concrete composites with reduced curing times. There is a need for concrete composites with high compressive strength.

It is, therefore, an object of the present invention to seek to alleviate the above identified problems.

### SUMMARY OF THE INVENTION

The present invention relates to a process for producing a concrete composite comprising:
a) providing a particulate material, wherein the particulate material comprises minerals having a content of at least 30% m/m of calcium, magnesium, aluminium, silicon, potassium or iron, or a combination of two or more thereof,
b) providing an aggregate,
c) providing a primary additive, wherein the primary additive comprises a sugar or derivative thereof, a polyol or derivative thereof, an organic acid comprising a carboxylic acid, or an organic acid salt comprising a carboxylate salt, or any combination of two or more thereof, wherein the carboxylic acid containing compound or carboxylate salt containing compound comprises citric acid, sodium gluconate, sodium citrate, calcium nitrate, acetic acid, sodium acetate, calcium acetate, formic acid, glyceric acid, ascorbic acid, tartaric acid, oxalic acid, malic acid or lactic acid, or any combination of two or more thereof, wherein the primary additive is provided in the in the form of a solution, a colloidal suspension, or a powder,
d) mixing the particulate material, the aggregate and the primary additive with water to form a mixture, wherein the mixture is shaped using a mold or a support, wherein the mixture remains in the mold or on the support for a period of from 1 s to 2 hours and is then separated from the mold or the support prior to step (e), and
e) carbonating the mixture in the presence of carbon dioxide for a period of from 6 hours to 36 hours, wherein the concentration of carbon dioxide is greater than about 2 vol%.

### DETAILED DESCRIPTION

The present invention relates to a process for producing a concrete composite comprising:
a) providing a particulate material, wherein the particulate material comprises minerals having a content of at least 30% m/m of calcium, magnesium, aluminium, silicon, potassium or iron, or a combination of two or more thereof,
b) providing an aggregate,
c) providing a primary additive, wherein the primary additive comprises a sugar or derivative thereof, a polyol or derivative thereof, an organic acid comprising a carboxylic acid, or an organic acid salt comprising a carboxylate salt, or any combination of two or more thereof, wherein the carboxylic acid containing compound or carboxylate salt containing compound comprises citric acid, sodium gluconate, sodium citrate, calcium nitrate, acetic acid, sodium acetate, calcium acetate, formic acid, glyceric acid, ascorbic acid, tartaric acid, oxalic acid, malic acid or lactic acid, or any combination of two or more thereof, wherein the primary additive is provided in the in the form of a solution, a colloidal suspension, or a powder,
d) mixing the particulate material, the aggregate and the primary additive with water to form a mixture, wherein the mixture is shaped using a mold or a support, wherein the mixture remains in the mold or on the support for a period of from 1 s to 2 hours and is then separated from the mold or the support prior to step (e), and
e) carbonating the mixture in the presence of carbon dioxide for a period of from 6 hours to 36 hours, wherein the concentration of carbon dioxide is greater than about 2 vol%.

It is an advantage of the present invention that carbon dioxide is captured which reduces carbon emissions. In particular, the present invention can reduce industrial carbon emission by capturing, adsorbing, fixing and storing carbon dioxide in the composite of the invention which prevents the carbon dioxide from entering the atmosphere. It is an advantage that the process of the invention can be carbon neutral, or even be carbon negative. It is a further advantage that the present invention can utilise waste materials or primary of secondary mineral, mineral wastes, mineral by-products. Surprisingly, it has been found that composites made in accordance with the present invention are denser than those made by other methods. Further, as shown in the examples, it has been found that composites of the present invention have a higher compressive strength than those without the primary additive. Further they have a finer pore structure and are already carbonated which increases their chemical resistance to degradation, such as to de-icing salt, heat, frost, acid environments, natural carbonation and seawater and thus the composites of the invention are more durable, as well as sustainable. This enhanced chemical resistance is highly desirable in uses such as flood defences, and particularly seawalls. Seawalls are known to be salty environments. It is believed that the inclusion of the primary additive, in combination with the carbonating step densifies the matrix and makes the composite more durable, giving it a higher material strength and a higher resistance to salt ingress or from other substances.

Preferably, the particulate material may be referred to as a reactive component.

Preferably, the particulate material comprises minerals having a content of at least 30% m/m of calcium, magnesium, aluminium, silicon or iron, or a combination of two or more thereof, preferably minerals having a content of at least 30% m/m of calcium, magnesium, aluminium or silicon or a combination of two or more thereof.

Preferably, the particulate material comprises a metal oxide, a metal hydroxide or a metal silicate, or a combination of two or more thereof, preferably calcium oxide, calcium hydroxide, a calcium silicate, magnesium oxide, magnesium hydroxide, a magnesium silicate or an iron silicate or any combination of two or more thereof, preferably calcium oxide, calcium hydroxide, a calcium silicate, magnesium oxide, magnesium hydroxide or a magnesium silicate or any combination of two or more thereof, preferably, the particulate material comprises calcium oxide, calcium hydroxide or a calcium silicate, or any combination of two or more thereof, preferably calcium oxide or calcium hydroxide, most preferably the particulate material comprises calcium oxide. Preferably, the particulate material comprises a calcium silicate, a calcium aluminate, an iron silicate, a calcium ferrite, a calcium aluminate ferrite, a magnesium silicate, a magnesium aluminate, a magnesium ferrite or any combination of two or more thereof,

The preferred incorporation of the reactive metal silicate powders (such as sodium meta silicate) initiates the carbonation process at an earlier stage and allows for a greater extent of carbonate matrix to be formed within the mixture material.

Calcium silicates have varying proportions of calcium as calcium oxide, and silicon as silicon dioxide. Calcium silicates may be anhydrous or hydrated. Calcium silicate may preferably comprise other constituents such as magnesium ions, aluminium ions, potassium ions, iron ions, or silicon as silicon dioxide.

Preferably calcium silicate is formed of varying proportions of calcium as calcium oxide, and silicon as silicon dioxide and optionally water, aluminium as aluminium oxide and/or iron as iron oxide. Preferably other metal cation silicates, such as magnesium, iron and potassium are formed of varying proportions of metal as a metal oxide, and silicon as silicon dioxide and optionally water and aluminium as aluminium oxide.

Preferred calcium silicates include calcium orthosilicate - Ca₂SiO₄, wollastonite - CaSiOs, bellite - 2CaO SiO₂, and/or tricalcium silicate - 3CaO · SiO₂.

An advantage of the process is that carbon dioxide emissions are reduced by capturing carbon dioxide in the composite such as shown by the following reaction schemes.

Calcium oxide:

CaO + CO₂ → CaCO₃

Calcium hydroxide:

Ca(OH)₂ + CO₂ → CaCO₃+H₂O

Tricalcium silicate (C₃S):

2Ca₃SiO₅ + 7H₂O → 3CaO·SiO₂·4H₂O + 3Ca(OH)₂

Ca(OH)₂ + CO₂ → CaCO₃+H₂O

Bellite (C₂S)-

2 Ca₂SiO₄ + 4 H₂O →3 CaO · 2 SiO₂ · 3 H₂O + Ca(OH)₂

Ca(OH)₂ + CO₂ → CaCO₃+H₂O

As shown above, calcium silicates may react directly with carbon dioxide, or may react first with water to produce calcium hydroxide. Calcium hydroxide may further react with carbon dioxide to form calcium carbonate. It will be appreciated that other calcium silicates will have different reaction schemes which will result in the formation of calcium carbonate or aluminium silicates. Calcium silicates may also react with water to produce calcium silicate hydrate. Calcium silicate hydrate may react with carbon dioxide to form calcium silicate structures.

Preferably, the carbonation step results in the formation of calcium carbonate, magnesium carbonate, calcium silicates, magnesium silicates, calcium alumina silicates, magnesium alumina silicates or any combination of two or more thereof. Carbonates and metal silicates, are suitable binder to hold the composite together. It provides structural rigidity to the composite. Further they may be produced to act as a binder to provide additional structural rigidity.

Preferably, the carbonation step results in the formation of calcium carbonate, magnesium carbonate, calcium alumina silicates or any combination of two or more thereof, preferably calcium carbonate or magnesium carbonate, preferably calcium carbonates. Carbonates, and in particular calcium carbonate is a suitable binder to hold the composite together. It provides structural rigidity to the composite. Further carbonates may be produced to act as a binder to provide additional structural rigidity, such as potassium carbonate.

Further, the optional formation of calcium aluminium silicate hydrates and/or calcium silicate hydrates, iron silicates hydrates and magnesium silicate hydrates and/or magnesium aluminite silicate hydrates, may also act as a binder. Further, the optional formation of aluminium silicate hydrates and/or calcium silicate hydrates may also act as a binder. Such aluminium silicate hydrates are well known in cement production.

The formation of calcium carbonate, magnesium carbonate, and optionally potassium carbonate generating an exothermal reaction can help expel water as the composite is formed. This also applies to the formation of metal silicates. Further, applying pressure during the formation of the composite can also expel water as the composite is formed. Further, the application of heat can help evaporate water from the composite, such as by applying hot air. Heat may advantageously be supplied from a kiln

Preferably, about 5% to about 100% by weight of the particulate material is selected from calcium oxide, calcium hydroxide, a calcium silicate, magnesium oxide, magnesium hydroxide, a magnesium silicate or an iron silicate, or any combination of two or more thereof, more preferably about 25% to about 95% by weight of the particulate material is selected from calcium oxide, calcium hydroxide, a calcium silicate, magnesium oxide, magnesium hydroxide, a magnesium silicate or an iron silicate, or any combination of two or more thereof, more preferably about 30% to about 85% by weight of the particulate material is selected from calcium oxide, calcium hydroxide, a calcium silicate, magnesium oxide, magnesium hydroxide, a magnesium silicate or an iron silicate, or any combination of two or more thereof, more preferably about 40% to about 70% by weight of the particulate material is selected calcium oxide, calcium hydroxide, a calcium silicate, magnesium oxide, magnesium hydroxide, a magnesium silicate or an iron silicate, or any combination of two or more thereof. Such proportions of calcium oxide, calcium hydroxide, a calcium silicate, magnesium oxide, magnesium hydroxide, a magnesium silicate or an iron silicate, or any combination of two or more thereof are suitable to react to form a calcium carbonate binder, and/or a magnesium carbonate binder to hold the composite together.

Preferably, about 5% to about 100% by weight of the particulate material is selected from calcium oxide, calcium hydroxide, a calcium silicate, calcium aluminate, calcium ferrite, calcium aluminate ferrite, magnesium oxide, magnesium hydroxide, a magnesium silicate, magnesium aluminate silicate, or an iron silicate, or any combination of two or more thereof, more preferably about 25% to about 95% by weight of the particulate material is selected from calcium oxide, calcium hydroxide, a calcium silicate, calcium aluminate, calcium ferrite, calcium aluminate ferrite, magnesium oxide, magnesium hydroxide, a magnesium silicate, magnesium aluminate silicate, or an iron silicate, or any combination of two or more thereof, more preferably about 30% to about 85% by weight of the particulate material is selected from calcium oxide, calcium hydroxide, a calcium silicate, calcium aluminate, calcium ferrite, calcium aluminate ferrite, magnesium oxide, magnesium hydroxide, a magnesium silicate, magnesium aluminate silicate, or an iron silicate, or any combination of two or more thereof, more preferably about 40% to about 70% by weight of the particulate material is selected from calcium oxide, calcium hydroxide, a calcium silicate, calcium aluminate, calcium ferrite, calcium aluminate ferrite, magnesium oxide, magnesium hydroxide, a magnesium silicate, magnesium aluminate silicate, or an iron silicate, or any combination of two or more thereof. Such proportions of calcium oxide, calcium hydroxide, a calcium silicate, calcium aluminate, calcium ferrite, calcium aluminate ferrite, magnesium oxide, magnesium hydroxide, a magnesium silicate, magnesium aluminate silicate, or an iron silicate, or any combination of two or more thereof are suitable to react to form a calcium carbonate binder, and/or a magnesium carbonate binder to hold the composite together.

Preferably, about 10% to about 100% by weight of the particulate material is selected from calcium oxide, calcium hydroxide or a calcium silicate, or any combination of two or more thereof, more preferably about 25% to about 95% by weight of the particulate material is selected from calcium oxide, calcium hydroxide or a calcium silicate, or any combination of two or more thereof, more preferably about 30% to about 85% by weight of the particulate material is selected from calcium oxide, calcium hydroxide or a calcium silicate, or any combination of two or more thereof, more preferably about 40% to about 70% by weight of the particulate material is selected from calcium oxide, calcium hydroxide or a calcium silicate, or any combination of two or more thereof. Such proportions of calcium oxide, calcium hydroxide or a calcium silicate, or any combination of two or more thereof are suitable to react to form a calcium carbonate binder to hold the composite together.

Preferably, about 10% to about 100% by weight of the particulate material is selected from calcium oxide or calcium hydroxide, or any combination thereof, more preferably about 25% to about 95% by weight of the particulate material is selected from calcium oxide or calcium hydroxide, or any combination thereof, more preferably about 30% to about 85% by weight of the particulate material is selected from calcium oxide or calcium hydroxide, or any combination thereof, more preferably about 40% to about 70% by weight of the particulate material is selected from calcium oxide or calcium hydroxide, or any combination thereof. Such proportions of calcium oxide or calcium hydroxide, or any combination thereof is suitable to react to form a calcium carbonate binder to hold the composite together. Calcium oxide and calcium hydroxide are particularly preferred as they can react directly with carbon dioxide to form calcium carbonate.

Preferably, about 10% to about 100% by weight of the particulate material is calcium oxide, more preferably about 25% to about 95% by weight of the particulate material is calcium oxide, more preferably about 30% to about 85% by weight of the particulate material is calcium oxide, more preferably about 40% to about 70% by weight of the particulate material is calcium oxide. Such proportions of calcium oxide are suitable to react to form a calcium carbonate binder to hold the composite together. Calcium oxide is particularly preferred because it reacts directly with carbon dioxide to form calcium carbonate, without producing any by-products, such as water. This makes the process more efficient as excess water does not need to be removed or incorporated into the composite.

Preferably, about 10% to about 100% by weight of the particulate material is a calcium silicate or a magnesium silicate, or a combination of two or more thereof, more preferably about 25% to about 95% by weight of the particulate material is a calcium silicate or a magnesium silicate, or a combination of two or more thereof, more preferably about 30% to about 85% by weight of the particulate material is a calcium silicate or a magnesium silicate, or a combination of two or more thereof, more preferably about 40% to about 70% by weight of the particulate material is a calcium silicate or a magnesium silicate, or a combination of two or more thereof. Such proportions of is a calcium silicate or a magnesium silicate, or a combination of two or more thereof are suitable to react to form a silicate binder to hold the composite together.

Preferably, the particulate material further comprises aluminium oxide, silicon dioxide, an iron oxide, calcium ferrite, an aluminium silicate, a sodium silicate, a potassium silicate, calcium sulphate, magnesium sulphate, potassium sulphate or sodium sulphate, or any combination of two or more thereof. Preferably, the particulate material further comprises aluminium oxide, silicon dioxide, iron oxide, calcium ferrite, an aluminium silicate, or a sodium silicate, or any combination of two or more thereof.

An advantage of including further constituents is that they may also react to help harden the composite. This may be a hydration reaction, carbonation reaction, or a further reaction. These reactions of further constituents improve the strength of the resulting carbonate, in particular the composite.

Preferably, the particulate material is at least about 5 wt% amorphous, preferably at least about 30 wt% amorphous, preferably at least about 80 wt% amorphous, preferably substantially amorphous. This helps increase the reactivity of the particulate material.

The particulate material may be substantially crystalline. Preferably, the particular material is at least about 5 wt% to about 100% crystalline, preferably at least about 30 wt% crystalline, preferably at least about 80 wt% crystalline, preferably substantially crystalline. This helps increase the reactivity of the particulate material and thus increase the strength of the composite.

Preferably, the particulate material comprises blast furnace slag, meta kaolin, calcinated clay, olivine, serpentine, Portland cement, cement by-pass dust, lime kiln dust, cement kiln dust, air pollution control residue, Portland clinker, cement, limestone powder, quicklime, rock fines, concrete fines, mine tailings, fly ash, bottom ash, biomass ash, metallurgy slag, red mud, paper ash, dusts, oil shale ash, metal silicate powder, metal hydroxide powder, calcium sulphate, pozzolanic material or bleaching earth material, or any combination of two or more thereof, preferably, the particulate material comprises blast furnace slag, metallurgy slag, Portland cement, Portland clinker, cement, air pollution control residue or any combination of two or more thereof, preferably, the particulate material comprises steel slag, stainless steel slag, copper slag, lead slag, Portland cement, Portland clinker, cement, cement by-pass dust, lime kiln dust, cement kiln dust, fly ash or bottom ash or any combination of two or more thereof, preferably the particulate material comprises blast furnace slag or metallurgy slag preferably steel slag or stainless steel slag.

Preferably, the particulate material comprises blast furnace slag, meta kaolin, calcinated clay, olivine, serpentine, Portland cement, cement by-pass dust, lime kiln dust, cement kiln dust, air pollution control residue, Portland clinker, cement, limestone powder, dolomite powder, quicklime, rock fines, concrete fines, mine tailings, fly ash, bottom ash, biomass ash, metallurgy red mud, paper ash, dusts, oil shale ash, metal (meta) silicate powder, metal hydroxide powder, calcium sulphate, pozzolanic crystalline materials or bleaching earth material, or any combination of two or more thereof, preferably, the particulate material comprises converter steel slag, ladle steel slag, synthetic slag, or any combination of two or more thereof.

It is an advantage of the process of the invention that it makes use of waste materials that would otherwise be disposed of, thereby reducing some of the damaging effects on the environment. The present invention provides an alternative use for these materials rather than disposing of them in landfill.

Preferably the Portland cement or quick lime, or Portland clinker are out of date. This means that the best before date for these has been passed.

Preferably, the fly ash and bottom ash is from burning coal, biomass, manure or waste, such as household waste, or is produced by industries such as glass production, oil and gas refinement.

Preferably, the meta kaolin, calcinated clay is produced from mine tailings and mining wastes and natural clay deposits.

Preferably, the blast furnace slag or metallurgy slags is from metal production, such as the production of metal smelts, iron, steel, stainless steel, copper, lead, nickel or zinc, preferably the blast furnace slag is steel slag.

Preferably, the bleaching earth material is from industry, producing natural oil such as palm oil, preferably the bleaching earth material is bleaching earth filtrate material.

Preferably, the particulate material may be in the form of a fine powder with an average particle size of about 0.5 µm to about 1 mm, preferably about 1 µm to about 1 mm, preferably about 5µm to about 500 µm. An advantage of using particles of this size is that they have a relatively large surface area which maximises the efficiency of the carbonation reaction. Further, it is an advantage of the present invention that such fine powders can be used as a starting material and incorporated into a larger final composite for further use.

Preferably, the particulate material may be in the form of a granule with an average particle size of about 1 mm to about 60 mm, preferably about 1 mm to about 40 mm, most preferably about 1 mm to about 30 mm. Such particle sizes have the advantage of not requiring specialist equipment to handle them as they are of a relatively large size.

The average particle size may be measured by laser diffraction or sieving, preferably by laser diffraction.

The average particle size of the particulate material may be reduced, such as by milling, grinding, or crushing. Further, the particulate material may be made from a larger piece or pieces of material such as by grinding or crushing.

It is an advantage of using particles of this size as they have a relatively large surface area which maximises the efficiency of the carbonation reaction, maximising the extent to which the carbonate matrix can form. It is a further advantage of using particles of this size as they are easily mixed into the forming mixture allowing for the easier distribution throughout when using conventional mixing techniques known in the field.

A further advantage of grinding the particulate material is that it preferably increases the amount of amorphous or crystalline material present which increases the rate of the carbonation reaction. This is particularly advantageous when the particulate material comprises slag or ashes, preferably synthetic slags, steel slag or ashes from power or biomass incinerator plants

Preferably, the process comprises washing the particulate material with water, preferably washing the particulate material with water prior to mixing step (d). An advantage of washing the particulate material is that water soluble salts are removed, such as sodium chloride, potassium chloride, magnesium chloride and sulphates. These salts can then be used for other processes, such as after they have been recovered by evaporation. It is advantageous to remove such water-soluble salts because they are undesirable impurities. For example, in processes such as the manufacture of concrete, the amount of salt needs to be carefully controlled. The presence of such salt may weaken the strength development and reduce the durability of any resulting concrete, particularly steel reinforced concrete.

A further advantage of washing the particulate material is that water soluble heavy metals are removed, such as cationic and anionic metal species. These metals can then be used for other processes, such as after they have been recovered by evaporation. These metals can also be recovered by complexation. It is advantageous to remove such water-soluble heavy metals because they are undesirable impurities. For example, in processes such as the manufacture of cement, the amount of water-soluble heavy metals needs to be carefully controlled. The presence of such metals may weaken the strength development and reduce the durability of any resulting concrete, particularly steel reinforced concrete.

A further advantage of washing the particulate material is that the presence of water can start a curing process of the particulate material. In particular, calcium oxide can react with water to form calcium hydroxide. Further, calcium silicates can react with water to form calcium silicate hydrates which act as an additional binder for the composite.

The washing step is particularly advantageous when the particulate material comprises cement kiln dust or lime kiln dust, ash and slag as these materials typically contain unwanted salts. Further, the composition of these materials means that they start to cure in the presence of water.

After the washing step has been carried out, the particulate material may be pressed, filtered or processed under vacuum to remove excess water. This has the advantage of removing salts dissolved in the water from the particulate material and removing excess water. This has the further advantage of removing heavy metals dissolved in the water from the particulate material.

Preferably, the process further comprises providing a material from organic origin, wherein step (d) comprises mixing the particulate material, the aggregate, the primary additive and the material from organic origin with water to form a mixture. Preferably the material from organic origin comprises wood, paper, plastic, sludge, natural fibre, cellulose or plants. Including such a material from organic origin with reduce the weight of the resulting composite. Further it allows another waste material to be used.

Preferably, the aggregate comprises primary aggregate, secondary aggregate or recycled aggregate, preferably sand, rock, concrete fines, slag, ashes or recycled concrete, artificial aggregates or any combination of two or more thereof, preferably man-made carbon dioxide negative artificial aggregate. Preferably, the aggregate comprises primary aggregate, secondary aggregate or recycled aggregate, preferably sand, rock, concrete fines, slag, or recycled concrete, or any combination of two or more thereof, preferably man-made carbon dioxide negative aggregate. Man-made carbon dioxide negative aggregate preferably means an aggregate made by the reaction of carbon dioxide with a particulate material, preferably wherein calcium carbonate is formed. The amount of carbon dioxide used up in the process is preferably less than the amount of carbon dioxide produced by making the aggregate.

Preferably, the aggregate has an average particle size of about 0.1 mm to about 90 mm , preferably about 0.5 mm to about 50 mm, preferably about 1 mm to about 45 mm, preferably about 2 mm to about 40 mm, preferably about 4 mm to about 30 mm.

An advantage of using aggregate with such particle sizes is that they are easily handled and processed with current techniques in the field, meaning that no adaptations to current apparatus are necessary and so the process can be easily adopted in industry.

The average particle size may be measured by laser diffraction or sieving, preferably by laser diffraction.

The average particle size of the aggregate may be reduced, such as by milling, grinding, or crushing. Further, the aggregate material may be made from a larger piece or pieces of material such as by milling, grinding or crushing.

Preferably the average size of the aggregate is greater than the average size of the particulate material, preferably the ratio of the average size of the aggregate to the average size of the particulate material is at least about 2:1, preferably at least about 3:1, preferably in the range of about 2:1 to about 100:1, preferably about 5:1 to about 20:1.

It is an advantage of the process of the invention that a sugar or derivative thereof, a polyol or derivative thereof, an organic acid, an organic acid salt or an inorganic acid or any combination of two or more thereof may form complexes with metal ions present in the mixture. These metal ion complexes can then aid uniform distribution of metal ions throughout the mixture, thereby allowing for the formation of a substantially uniform carbonate matrix following the subsequent carbonation step. In particular, the primary additive is believed to form complexes with cations such as calcium or magnesium ions, which helps distribute and improve the reaction rate of the cations such as calcium or magnesium ions throughout the mixture and at the surface of the mineral binder. In the carbonation step, the cations such as calcium or magnesium ions are thus distributed throughout the mixture and form a more uniform carbonate matrix, such as calcium- or magnesium carbonate matrix or densified layer around the binder particle than if the primary additive is not used.

The primary additive is provided in the form of a solution, a colloidal suspension, or a powder, preferably an aqueous solution or an aqueous colloidal suspension, preferably an aqueous solution.

It is an advantage for the primary additive to be incorporated in the form of a solution, a colloidal suspension or a powder to further enable uniform distribution throughout the whole of the mixture, using current techniques of the field. It is particularly advantageous for these to be aqueous, as water is added at the mixing stage. An aqueous solution is particularly preferred as it allows the primary additive to be easily mixed in the mixture. Preferably, the primary additive comprises a sugar or derivative thereof or a polyol or a derivative thereof or any combination of two or more thereof, preferably a sugar or derivative thereof.

Preferably the sugar or derivative thereof comprises a monosaccharide or derivative thereof, a disaccharide or derivative thereof, an oligosaccharide or a derivative thereof or a polysaccharide or a derivative thereof, or any combination of two or more thereof. It has been found that such additives have particular utility in complexing with metal ions, such as calcium ions.

Preferably, the primary additive comprises a monosaccharide or derivative thereof, a disaccharide or derivative thereof, an oligosaccharide or a derivative thereof or any combination of two or more thereof. It has been found that such additives have particular utility in complexing with metal ions, such as calcium ions.

Preferably, the monosaccharide comprises fructose, glucose, galactose, ribose, xylose, arabinose, mannose or idose, or a derivative of any thereof, or any combination of two or more thereof.

Preferably, the monosaccharide derivative comprises glucuronic acid, gluconic acid, glucosamine, galacturonic acid, galactosamine, ribonic acid, xylonic acid, arabinonic acid, arabinosamine, mannosamine, mannonic acid, iduronic acid, idosamine, sorbitol or neuraminic acid, or any combination of two or more thereof.

Preferably, the disaccharide comprises sucrose, lactulose, lactose, maltose, trehalose or cellobiose, or a derivative of any thereof, or any combination of two or more thereof.

Preferably, the disaccharide derivative comprises chitobiose, lactosamine, sucralose or trehalosamine, or any combination of two or more thereof.

Preferably, the oligosaccharide is substantially comprised of about 3 to about 10 monosaccharides as described above.

Preferably, the oligosaccharide comprises a fructo-oligosaccharide or a galactooligosaccharide or a derivative of any thereof, or any combination of two or more thereof.

Preferably, the oligosaccharide derivative is substantially comprised of one or more monosaccharide derivatives as described above.

Preferably, the polysaccharide is substantially comprised of about 10 or more monosaccharides as described above.

Preferably, the polysaccharide comprises starch, amylose, amylopectin, chitin, pectin, cellulose, hemicellulose, glycogen, dextrin, maltodextrin, dextran or arabinoxylans, or a derivative of any thereof, or any combination of two or more thereof.

Preferably, the polysaccharide derivative is substantially comprised of one or more monosaccharide derivatives as described above.

Preferably, the polysaccharide derivative comprises hyaluronates, dermatan sulphates, chondroitin sulphates, heparin, heparan sulphates or keratan sulphates, or any combination of two or more thereof.

The sugar may comprise molasses.

Preferably, the polyol comprises a sugar alcohol, preferably glycerol, lactitol, isomalt, maltitol, mannitol, xylitol, or any combination of two or more thereof.

It is an advantage of the process of the present invention that the primary additive is readily available and can be sustainably sourced from renewable sources.

Preferably carboxylic acid means a carboxylic acid containing compound.

Preferably the organic acid salt comprises a metal salt of an organic acid, preferably a sodium, calcium, magnesium or potassium salt.

Preferably organic acid salt means an organic acid salt containing compound.

Preferably the primary additive comprises a carboxylic acid containing compound or carboxylate salt containing compound.

Preferably, the carboxylic acid containing compound or carboxylate salt containing compound comprises citric acid, sodium citrate, calcium citrate, acetic acid, sodium acetate, calcium acetate or formic acid, or any combination of two or more thereof.

Preferably the carboxylic acid containing compound comprises citric acid, acetic acid, formic acid, glyceric acid, ascorbic acid, tartaric acid, oxalic acid, malic acid or lactic acid, or any combination of two or more thereof.

Preferably, the primary additive comprises sucrose, sodium gluconate, glucose, lactic acid, calcium citrate or glycerol, or a combination of two or more thereof, preferably sucrose, sodium gluconate, glucose, or glycerol, or a combination of two or more thereof, preferably sucrose, sodium gluconate or glucose, or a combination of two or more thereof,

Preferably, the mixture comprises about 0.001 wt% to about 10 wt% of the primary additive on a dry weight basis, preferably about 0.005 wt% to about 10 wt% of the primary additive on a dry weight basis, preferably from about 0.01 wt% to about 5 wt% on a dry weight basis, preferably, from about 0.02 wt% to about 3 wt% on a dry weight basis. Most preferably, the mixture comprises about 0.001 wt% to about 0.1 wt% of the primary additive on a dry weight basis,

Preferably, the mixture comprises about 0.001 wt% to about 10 wt% of the primary additive as a percentage of the particulate material, preferably about 0.005 wt% to about 10 wt% of the primary additive as a percentage of the particulate material, preferably from about 0.01 wt% to about 5 wt% as a percentage of the particulate material, preferably, from about 0.02 wt% to about 3 wt% as a percentage of the particulate material.

It is an advantage of the process of the present invention that the observed effect is achieved requiring only a small amount of primary additive, relative to the amount of mixture, thereby minimising manufacturing costs while also minimising carbon footprint.

Preferably, the process further comprises providing a further additive, wherein step (d) comprises mixing the particulate material, the aggregate, the primary additive and the further additive with water to form a mixture.

Preferably, the further additive comprises a bicarbonate.

Preferably, the further additive is provided in the form of a liquid or a powder.

Preferably, the further additive comprises sodium bicarbonate, potassium bicarbonate, caesium bicarbonate, magnesium bicarbonate, calcium bicarbonate, ammonium bicarbonate or carbonic acid, or any combination of two or more thereof.

The preferred incorporation of the bicarbonate further additive initiates the carbonation process at an earlier stage and allows for a greater extent of carbonate matrix to be formed within the mixture material.

Preferably the further additive comprises calcium nitrate and/or sodium nitrate. An advantage of this is that this increases the speed of the hardening of the composite.

Preferably, the further additive comprises a plasticizer, preferably polycarboxylate ether and/or polycarboxylate. A plasticizer can be used to improve the strength of the resulting composite.

Preferably, the further additive comprises fibres or nanomaterials, preferably carbon fibres, carbon nanotubes, natural fibres, plastic fibres, glass fibres, stone fibres, mineral wool fibres or steel fibres or any combination of two or more thereof.

Preferably the further additive is used in an amount of about 0.0001 wt% to about 15 wt% on a dry weight basis of the mixture, preferably about 0.001 wt% to about 5 wt% on a dry weight basis of the mixture, preferably about 0.01 wt% to about 5 wt% on a dry weight basis of the mixture, preferably about 0.1 wt% to about 2 wt% on a dry weight basis of the mixture.

Preferably the further additive is used in an amount of about 0.001 wt% to about 15 wt% as a percentage of the particulate material, preferably about 0.001 wt% to about 5 wt as a percentage of the particulate material, preferably about 0.01 wt% to about 5 wt% as a percentage of the particulate material, preferably about 0.1 wt% to about 2 wt% as a percentage of the particulate material.

Preferably, the water provided in step (d) is waste water. This has the advantage of using another waste product in the present invention. The waste water preferably comprises organic complexes, inorganic complexes or metals and combinations thereof. The waste water may further help cure the mixture.

Preferably, the water used to form the mixture comprises dissolved carbon dioxide.

Using water comprising dissolved carbon dioxide in forming the mixture provides for a method in which the carbonation process can be initiated early and quickly, and can therefore accelerate the carbonation procedure, reducing the time required for curing.

Preferably, the water used to form the mixture comprises dissolved carbon dioxide from about 0.5 g/L to about 12 g/L, preferably from about 1 g/L to about 5 g/L, preferably from about 2 g/L to about 12 g/L, preferably from about 3 g/L to about 10 g/L, preferably from about 4 g/L to about 8 g/L. Such amounts are suitable for the carbonation step.

The mixture is shaped prior to step (e) using a mold or a support. Such a shaping step allows the resulting composite to have the desired form.

It is an advantage of the process of the present invention that the mixture can be shaped by a mold or a support in forming a composite of any desired molded shape. This is particularly useful for creating composites with the same features consistently. Further, it allows composite pieces with intricate shaping or design features to be made.

The mixture is separated from the mold or the support before undergoing carbonation in step (e). The mixture remains in the mold or on the support for a period of from about 1s to about 2 hours, and is then separated from the mold or the support before undergoing carbonation, preferably for a period of from about 6 hours to about 36 hours. It is advantageous for the mixture to lose water when it remains in the mold or on the support as this facilitates the later carbonation step. The mixture remains in the mold or on the support for a period of from about 1 s to about 2 hours. This is particularly preferred for products such as elements, pavers, blocks, slabs and briquettes, preferably pavers and briquettes.

It is advantageous for the mixture to remain in the mold or on the support to help it retain its shape.

Preferably, the process comprises removing water (pre-curing) from the mixture. It is an advantage of the process of the present invention that optionally removing water from the mixture increases the porosity of the mixture material. This allows carbon dioxide to penetrate into the mixture easily during the carbonation step, accelerating the formation of the carbonate matrix.

Preferably, the process comprises removing water from the mixture prior to the mixture being shaped. This helps the formation of a composite of the desired shape as there is less water to be removed during the carbonation step.

The formation of calcium carbonate, and optionally magnesium carbonate and/or potassium carbonate and related silicate phases generating an exothermal reaction can help expel water as the composite is formed. Further, applying pressure during the formation of the composite can also expel water as the composite is formed. Further, the application of heat can help evaporate water from the composite, such as by applying hot air or forced air. Heat may advantageously be supplied from a kiln

Preferably, the water is removed from the mixture at a temperature from about 5°C to about 80°C, preferably from about 5°C to about 70°C, preferably from about 5°C to about 60°C, preferably from about 10°C to about 80°C, preferably from about 15°C to about 70°C, preferably from about 20°C to about 60°C, preferably in the range of about 30 °C to about 50 °C.

Preferably, the mixture comprises from about 0.1 wt% to about 60 wt% of free water, preferably from about 0.5 wt% to about 30wt%, preferably from about 1 wt% to about 20 wt%, preferably from about 1 wt% to about 10 wt%. Such amounts are preferred for the desired porosity of the mixture. Preferably the amount of free water in the mixture is measured prior to the carbonation step, preferably immediately prior to the carbonation step. Preferably immediately prior means less than 30 minutes before, preferably less than 10 minutes before, preferably less than 5 minutes before.

Free water is water that is not bound to another component. Free water does not include water which forms a hydrate.

Preferably the dry weight ratio of the particulate material to the aggregate is about 1:15 to about 1:1, preferably wherein the dry weight ratio of the particulate material to the aggregate is about 1:10 to about 1:5. Such ratios allow a concrete composite to be formed.

Preferably the particulate material, the aggregate and the primary additive are mixed such that all are present throughout the mixture, preferably the mixture is substantially homogeneous. This helps to produce a uniform product, with a known composition.

Preferably the mixture comprises about 5% to about 99 % on a dry weight basis of aggregate, preferably about 10% to about 80% on a dry weight basis of aggregate, preferably about 5% to about 60 % on a dry weight basis of aggregate, preferably about 10% to about 50%, preferably about 15% to about 40%, such as more than about 35% on a dry weight basis. Such amounts are suitable for giving the resulting composite rigidity.

Preferably the mixture comprises about 1% to about 60 % on a dry weight basis of particulate material, preferably about 1% to about 50%, preferably about 1% to about 40%, preferably about 5% to about 60 % on a dry weight basis of particulate material, preferably about 10% to about 50%, preferably about 15% to about 40%, such as more than about 35% on a dry weight basis. Such amounts are suitable for providing sufficient calcium carbonate in the resulting composite.

Preferably, the mixture is carbonated in the presence of a gas comprising carbon dioxide concentration from about 2 vol% to about 100 vol%, preferably from about 5 vol% to about 90 vol%, preferably from about 7.5 vol% to about 85 vol%, preferably from about 10 vol% to about 80 vol%, preferably from about 20 vol% to about 80 vol%. Such amounts are suitable for the carbonation reaction to occur.

It is an advantage of the process of the present invention that the gas comprising carbon dioxide can be the flue gas from industrial activity such as a power plant, biomass or waste incinerator plant, metallurgy (steel) plant, crude oil processing plant or kiln, thereby reducing the carbon footprint of that industrial process by trapping the carbon dioxide within the composite being formed.

The carbonation is carried out for a period of from about 6 hours to about 36 hours, preferably from about 6 hours to about 24 hours.

Preferably, in step (e) the relative humidity is less than 100%, preferably wherein the relative humidity is between about 20% to about 100%, preferably from about 40% to about 90%, preferably about 50% to about 100%, preferably from about 50% to about 70%. Preferably, in step (e) the relative humidity is about 40% to about 80%. It is preferable that the relative humidity is less than 100%, and ideally lower to encourage the evaporation of water during the carbonation step. Preferably, excess water vapour is removed to reduce the relative humidity.

Preferably, in step (e), the temperature is in the range of about -5 °C to about 90 °C, preferably in the range of about 5 °C to about 80 °C preferably in the range of about 5 °C to about 60 °C, preferably in the range of about 10 °C to about 80 °C preferably in the range of about 20 °C to about 60 °C, preferably in the range of about 10 °C to about 50 °C. Such temperatures ensure that steam is not present and allow the carbonation reaction to progress effectively.

Preferably, the process is carried out at about 1 bar to about 2 bar. Preferably the process is carried out at substantially atmospheric pressure.

Preferably oxygen may be present during the process. This makes the process easier to manage as it is not necessary to exclude oxygen.

Preferably, the mixture has a pH from about 6 to about 14, preferably from about 7 to about 13, preferably from about 8 to about 13. Such pH values are advantageous as the resulting composite is less reactive than other composites.

Preferably, sulphur dioxide is present in step e). Sulphur dioxide is typically present in flue gases, and it is an advantage of the invention that it is not necessary to separate the sulphur dioxide from the flue gas. Further, sulphur dioxide may react with substituents in the mixture, particularly with sodium or potassium containing compounds to form sodium sulphite, sodium sulphate, potassium sulphite or potassium sulphate, or any combination of two or more of. This has the dual advantage of capturing sulphur dioxide and hardening the composite. Preferably, nitrous oxides and fine dusts from flue gas may also be present in step e) for analogous reasons.

The composite is a concrete composite.

Disclosed herein is a process for producing a composite comprising:
a) providing a particulate material, wherein the particulate material comprises calcium oxide, calcium hydroxide or a calcium silicate, or any combination of two or more thereof, preferably blast furnace slag, metallurgy slag, Portland cement, Portland clinker, cement, air pollution control residue, bottom ash or fly ash or any combination of two or more thereof, preferably, steel slag, stainless steel slag, Portland cement, Portland clinker, cement, cement kiln dust, lime kiln dust, fly ash, and bottom ash or any combination of two or more thereof, preferably metal slag, preferably steel slag, preferably wherein the particulate material has a particle size of about 5 µm to about 500 µm,
b) providing an aggregate, preferably a secondary aggregate,
c) providing a primary additive, wherein the primary additive comprises a sugar or derivative thereof, a polyol or derivative thereof, an organic acid, an organic acid salt or an inorganic acid, or any combination of two or more thereof, preferably wherein the primary additive comprises a sugar or a derivative thereof, an organic acid or an inorganic acid or any combination of two or more thereof, preferably, glucose, lactic acid, calcium citrate, sodium citrate or sodium gluconate or any combination of two or more thereof, and optionally providing a further additive, wherein the further additive preferably comprises a plasticiser and/or calcium nitrate and/or sodium nitrate,
d) mixing the particulate material, the aggregate, the primary additive, optional further additive and optional material of organic origin with water (preferably water with dissolved carbon dioxide) to form a mixture, preferably wherein the further additive is a plasticizer and
e) carbonating the mixture in the presence of carbon dioxide, wherein the concentration of carbon dioxide is greater than about 2 vol%, from about to 2 vol% to about 100 vol%, preferably from about 5 vol% to about 90 vol%, preferably from about 7.5 vol% to about 80 vol%, preferably from about 10 vol% to about 70 vol%, preferably wherein the temperature between is between about 10 °C and about 60 °C and preferably wherein the carbonation occurs for between about 6 hours and about 24 hours

Such a process is particularly useful for producing the composite disclosed herein.

Disclosed herein is a process for producing a composite comprising:
a) providing a particulate material, wherein the particulate material comprises calcium oxide, magnesium oxide, calcium hydroxide, magnesium hydroxide, a calcium silicate, a magnesium silicate, a calcium aluminate silicate, a magnesium aluminate silicate, iron silicate, calcium aluminite, ferrite or any combination of two or more thereof, preferably steel slag, blast furnace slag, synthetic slag, metallurgy slags, Portland cement, Portland clinker, belite cement, belite, alite, calcinated clay, cement, air pollution control residue, bottom ash orfly ash, lime stone powder, dolomite powder or any combination of two or more thereof, wherein the particulate material has a particle size of about 5 µm to about 500 µm,
b) providing an aggregate, preferably a secondary aggregate,
c) providing a primary additive, wherein the primary additive comprises a sugar or derivative thereof, a polyol or derivative thereof, an organic acid, an organic acid salt or an inorganic acid, or any combination of two or more thereof, preferably wherein the primary additive comprises a sugar or a derivative thereof, an organic acid or an inorganic acid or any combination of two or more thereof, preferably, sucrose, glucose, lactic acid, calcium citrate, sodium citrate or sodium gluconate or any combination of two or more thereof, and optionally providing a further additive, wherein the further additive preferably comprises a plasticiser and/or calcium nitrate and/or sodium nitrate,
d) mixing the particulate material, the aggregate, the primary additive, optional further additive and optional material of organic origin with water (preferably water with dissolved carbon dioxide) to form a mixture, preferably wherein the further additive is a plasticizer; and
e) carbonating the mixture in the presence of carbon dioxide, wherein the concentration of carbon dioxide is greater than about 2 vol%, from about to 2 vol% to about 100 vol%, preferably from about 5 vol% to about 90 vol%, preferably from about 7.5 vol% to about 80 vol%, preferably from about 10 vol% to about 80 vol%, preferably wherein the temperature between is between about 5 °C and about 60 °C, preferably wherein in the relative humidity is between about 40% and about 80%, and preferably wherein the carbonation occurs for between about 4 hours and about 24 hours

Such a process is particularly useful for producing the composite disclosed herein.

Disclosed herein is a composite produced by the process described herein.

Preferably, the composite is formed into any molded shape.

Preferably, the composite is substantially cuboidal.

Preferably, the composite is a precast product, preferably a panel, a paver, a block, a curb, a sewer, a briquette, or a slab.

Preferably, the composite is a panel, preferably a construction panel or a sandwich panel.

Such shapes have utility in the road and construction industry.

Preferably the composite has a height of about 1 cm to about 20 m, preferably about 1 cm to about 5 m and a length and a width each individually selected from about 1 cm to about 30m, preferably about 1 cm to about 13 m. It is an advantage of the present invention that the composite can be directly formed into such a shape, such as for use as a paver or a panel.

Preferably the composite has a height of from about 1 cm to about 50 cm and a length and a width each individually selected from about 1cm to about 3m, preferably the composite has a height of about 5 cm to about 40 cm and a length and a width each individually selected from about 40 cm to about 80 cm. Such sizes are suitable for a paver, a black, a curb, a sewer, a briquette or a slab.

Preferably the composite has a height of from about 20 cm to about 5 m and a length of from about 1 m to about 13 m, and a width of from about 1 cm to about 50 cm. Such sizes are suitable for blocks and panels.

The composite of the present disclosure is preferably a solid product. This gives the composite the structural rigidity to be used in construction.

Preferably, the composite has a density from about 700 kg/m³ to about 5000 kg/m³, preferably from about 700 kg/m³ to about 4000 kg/m³, preferably from about 1500 kg/m³ to about 3500 kg/m³, preferably from about 1800 kg/m³ to about 3000 kg/m³, preferably from about 2000 kg/m³ to about 3000 kg/m³.

It is an advantage of the process of the present invention that the resulting composite has a greater density than conventional cement construction materials. This makes the resulting composite well suited for applications that require shielding against or absorbing radiation, or where a high structural strength is required at high temperatures. It is also an advantage of the process of the present invention that the resulting composite with a greater density, also has a lower, finer porosity than conventional concrete materials. Preferably the pore size is less than about 100 µm, preferably less than about 10 µm. This finer porosity gives the material an improved resistance to chemicals and restricts the access of chemicals that may weaken, shrink or crack the material from penetrating far in. Applications that are in corrosive environments, such as de-icing salt, heat, frost and seawater are therefore well suited for using this composite with finer porosity.

It is also an advantage of the process of the present invention that the resulting composite has increased durability over conventional cement construction materials. Without wishing to be constrained by theory it is believed to be due to the greater extent of distribution of a carbonate matrix within the material.

Preferably, the composite has a free water content of about 0 wt% to about 30 wt%, preferably about 1 wt% to about 20 wt %, more preferably about 5 wt% to about 15 wt%.

It is not necessary to remove all the free water in the composite, prior to using it as a building material

Preferably, the composite has a pH from about 6 to about 14, preferably from about 7 to about 13, preferably from about 8 to about 12, preferably from about 8 to about 11. Such pH values are advantageous as the composite is less reactive than other composites.

Disclosed herein is the use of a composite as described herein, as a construction/building material, preferably a building material.

Preferably, the composite as disclosed herein is used as a prefabricated construction material.

It is an advantage of the disclosed composite that it can be molded to any required shape and size for which it might be needed, allowing it to be easily used in a wide variety of different construction projects.

### BRIEF DESCRIPTION OF THE DRAWINGS

Figure 1 shows the compressive strength of a composite with different primary additives.
Figure 2 shows the compressive strength of a composite with different primary additives.
Figure 3 shows the compressive strength of a composite with different compositions of particulate materials.

### EXAMPLES

### Example 1

A composite was formed by mixing 450 g ground steel slag (0 to 90 µm), 1350 g aggregate (sand 0 to 5 mm), 160 to 180 ml water and an optional primary additive. Table 1 shows the amounts of the primary additive used in each composite, as a percentage of the particulate content. The mixture was cast into cylindrical mold and pressure applied to form a cylindrical sample with a height of about 3.5 cm and a diameter of about 6 cm. The samples were then cured for 8 hours with 80% CO₂, at 30 °C, 60 to 80% relative humidity. The compressive strength of each sample was then measured with a compressive strength device machine according to EN196.1 - 2016. The compressive strength was measured for three cylindrical samples for each example shown below. The compressive strength is shown in Table 1. The standard deviation was +/- 2-3 MPa showing a slight deviation between samples, however the values between the samples with and without additives show a clear difference in compressive strength.

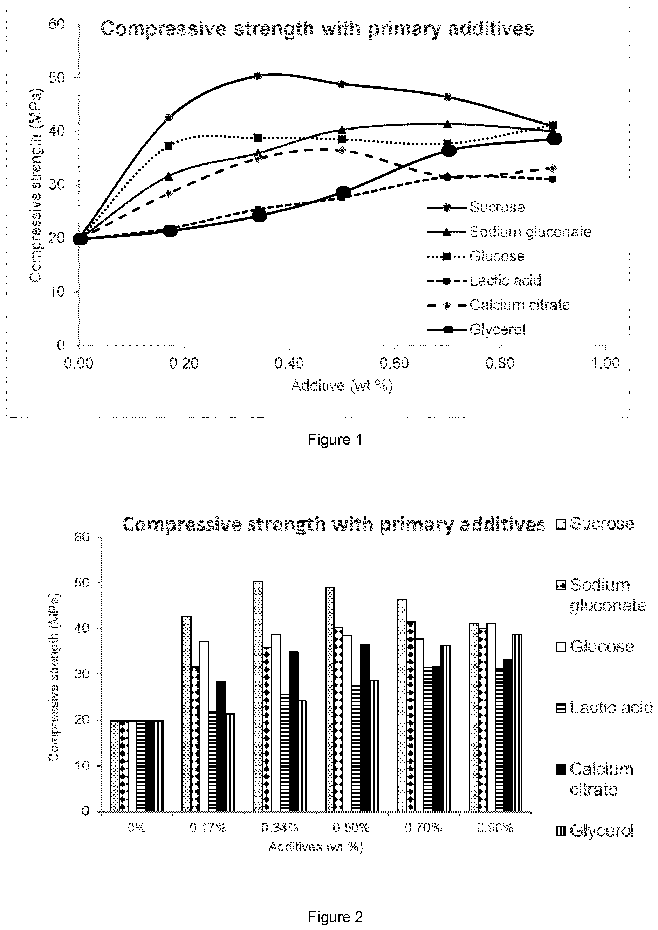

As shown in the results in Table 1 and Figure 1 and 2, the compressive strength of the composite increased by using a primary additive. The results show a particularly high increase in compressive strength when glucose, sucrose and sodium gluconate are used as the primary additive as the compressive strength more than doubles (over 40 MPa) compared to no primary additive being used (20 MPa). Further using glycerol nearly doubles the compressive strength. Calcium citrate and lactic acid also show an increase in compressive strength, with the calcium citrate showing a larger increase than lactic acid. It is believed that the increase in compressive strength for composites of the invention increases the chemical resistance of the composite. The data shows some of the technical advantages of the invention.

**Table 1**

| **Additive** | **Sucrose** | **Sodium gluconate** | **Glucose** | **Lactic acid** | **Calcium citrate** | **Glycerol** |
|---|---|---|---|---|---|---|
| **wt% additive** | Compressive Strength MPa | | | | | |
| 0 | 20 | 20 | 20 | 20 | 20 | 20 |
| 0.17 | 42 | 32 | 37 | 22 | 28 | 21 |
| 0.34 | 50 | 36 | 39 | 25 | 35 | 24 |
| 0.5 | 49 | 40 | 39 | 28 | 36 | 29 |
| 0.7 | 46 | 41 | 38 | 31 | 32 | 36 |
| 0.9 | 41 | 40 | 41 | 31 | 33 | 39 |

### Example 2

A composite was formed as set out for Example 1, except a proportion of the ground steel slag was replaced with cement (CEM 52.5R) as shown in Table 2. In these composites, the primary additive was sodium gluconate and the amount is shown in Table 2. The standard deviation was +/- 2-3 MPa showing a slight deviation between samples, however the values between the samples with and without additives show a clear difference in compressive strength.

**Table 2**

| **Amount of ground steel slag replaced with CEM 52.5R** | **Amount of Sodium gluconate wt%** | **Compressive Strength MPa** |
|---|---|---|
| REF (0% CEM) | 0 | 23 |
| 5% CEM | 0 | 23 |
| 10% CEM | 0 | 25 |
| 20% CEM | 0 | 30 |
| REF (0% CEM) | 0.5 | 42 |
| 5% CEM | 0.5 | 52 |
| 10% CEM | 0.5 | 58 |
| 20% CEM | 0.5 | 59 |

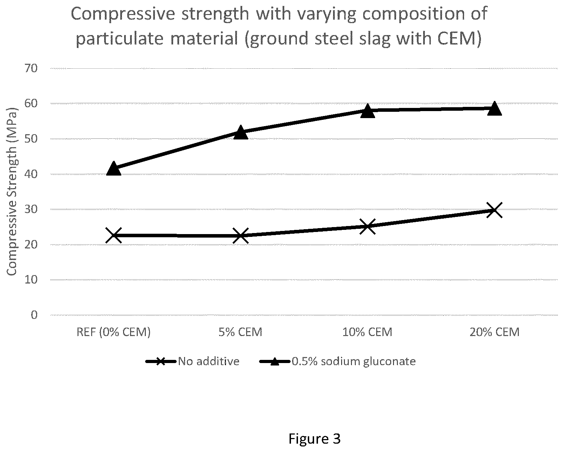

As shown in the results in Table 2 and Figure 3, the compressive strength of the composite still increased by using an additive when the composition of the particulate material is changed. It is believed that the increase in compressive strength for composites of the invention increases the chemical resistance of the composite. The data shows some of the technical advantages of the invention.

Within this specification, the term derivative preferably refers to a chemical compound or molecule made from a parent compound by one or more chemical reactions, and having a substantially similar chemical structure, or a salt thereof, preferably by any of carboxylation, oxidation, amination, reductive amination or chlorination. Preferably, the term derivative means (i) the product of incorporating one or more of a carboxylic acid, amine, sulfonic acid or sulfuric ester functional group into a parent compound, or a salt thereof, preferably for one or more of a carboxylic acid or amine, or a salt thereof, preferably for one or more carboxylic acid or a salt thereof, and/or (ii) the product of hydrogenation of a parent compound, or a salt thereof. Preferably the salt is a sodium salt or a calcium salt

It will be appreciated that air pollution control residue has a known meaning in the art and is a by-product of industry. Air pollution control residue is typically a mixture of ash, carbon and lime. It may comprise further components.

Within this specification, the term "about" means plus or minus 20%, more preferably plus or minus 10%, even more preferably plus or minus 5%, most preferably plus or minus 2%.

Within this specification, the term "substantially" means a deviation of plus or minus 20%, more preferably plus or minus 10%, even more preferably plus or minus 5%, most preferably plus or minus 2%.

## Claims

1. A process for producing a concrete composite comprising:
a. providing a particulate material, wherein the particulate material comprises minerals having a content of at least 30% m/m of calcium, magnesium, aluminium, silicon, potassium or iron, or a combination of two or more thereof.
b. providing an aggregate,
c. providing a primary additive, wherein the primary additive comprises a sugar or derivative thereof, a polyol or derivative thereof, an organic acid comprising a carboxylic acid, or an organic acid salt comprising a carboxylate salt, or any combination of two or more thereof, wherein the carboxylic acid containing compound or carboxylate salt containing compound comprises citric acid, sodium gluconate, sodium citrate, calcium nitrate, acetic acid, sodium acetate, calcium acetate, formic acid, glyceric acid, ascorbic acid, tartaric acid, oxalic acid, malic acid or lactic acid, or any combination of two or more thereof, wherein the primary additive is provided in the in the form of a solution, a colloidal suspension, or a powder,
d. mixing the particulate material, the aggregate and the primary additive with water to form a mixture, wherein the mixture is shaped using a mold or a support, wherein the mixture remains in the mold or on the support for a period of from 1 s to 2 hours and is then separated from the mold or the support prior to step (e), and
e. carbonating the mixture in the presence of carbon dioxide for a period of from 6 hours to 36 hours, wherein the concentration of carbon dioxide is greater than 2 vol%.

2. A process according to claim 1, wherein the particulate material:
i) comprises a metal oxide, a metal hydroxide or a metal silicate, or a combination of two or more thereof, preferably calcium oxide, calcium hydroxide, a calcium silicate, magnesium oxide, magnesium hydroxide, a magnesium silicate, or an iron silicate or any combination of two or more thereof, preferably calcium oxide, calcium hydroxide, a calcium silicate, magnesium oxide, magnesium hydroxide or a magnesium silicate or any combination of two or more thereof, preferably wherein the particulate material comprises calcium oxide, calcium hydroxide or a calcium silicate, or any combination of two or more thereof, preferably calcium oxide or calcium hydroxide, most preferably the particulate material comprises calcium oxide; and/or
ii) comprises blast furnace slag, meta kaolin, calcinated clay, olivine, serpentine, Portland cement, cement by-pass dust, lime kiln dust, cement kiln dust, air pollution control residue, Portland clinker, cement, limestone powder, quicklime, rock fines, concrete fines, mine tailings, fly ash, bottom ash, biomass ash, metallurgy slag, red mud, paper ash, dusts, oil shale ash, metal silicate powder, metal hydroxide powder, calcium sulphate, pozzolanic material or bleaching earth material, or any combination of two or more thereof, preferably, the particulate material comprises blast furnace slag, metallurgy slag, Portland cement, Portland clinker, cement, air pollution control residue or any combination of two or more thereof, preferably, the particulate material comprises steel slag, stainless steel slag, copper slag, lead slag, Portland cement, Portland clinker, cement, cement by-pass dust, lime kiln dust, cement kiln dust, fly ash or bottom ash or any combination of two or more thereof, preferably the particulate material comprises blast furnace slag or metallurgy slag preferably steel slag or stainless steel slag; and/or
iii) has an average particle size of 1 mm to 60 mm, preferably 1 mm to 40 mm, most preferably 1 mm to 30 mm; or
wherein the particulate material has an average particle size of 0.5 µm to 1 mm, preferably 1 µm to 1 mm, preferably 5 µm to 500 µm.

3. A process according to claim 1, wherein the particulate material further comprises aluminium oxide, silicon dioxide, an iron oxide, calcium ferrite, an aluminium silicate, a sodium silicate, a potassium silicate, calcium sulphate, magnesium sulphate, potassium sulphate or sodium sulphate, or any combination of two or more thereof, preferably, the particulate material further comprises aluminium oxide, silicon dioxide, iron oxide, calcium ferrite, an aluminium silicate, or a sodium silicate, or any combination of two or more thereof; and/or

4. A process according to any preceding claim, wherein the aggregate comprises primary aggregate, secondary aggregate or recycled aggregate, preferably sand, rock, concrete fines, slag or recycled concrete, or any combination of two or more thereof, preferably man-made carbon dioxide negative aggregate, and/or
wherein the aggregate has an average particle size of 0.1 mm to 90 mm, preferably 0.5 mm to 50 mm, preferably 1 mm to 45 mm, preferably 2 mm to 40 mm, preferably 4 mm to 30 mm.

5. A process according to any preceding claim, wherein the primary additive comprises a sugar or derivative thereof or a polyol or a derivative thereof or any combination of two or more thereof, preferably a sugar or derivative thereof.

6. A process according to any preceding claim, wherein the sugar or derivative thereof comprises a monosaccharide or derivative thereof, a disaccharide or derivative thereof, an oligosaccharide or a derivative thereof or a polysaccharide or a derivative thereof, or any combination of two or more thereof, preferably wherein the sugar or derivative thereof comprises a monosaccharide or derivative thereof, a disaccharide or derivative thereof, an oligosaccharide or a derivative thereof, or any combination of two or more thereof.

7. A process according to claim 6, wherein the monosaccharide comprises fructose, glucose, galactose, ribose, xylose, arabinose, mannose or idose, or a derivative of any thereof, or any combination of two or more thereof, preferably wherein the derivative comprises glucuronic acid, gluconic acid, glucosamine, galacturonic acid, galactosamine, ribonic acid, xylonic acid, arabinonic acid, arabinosamine, mannosamine, mannonic acid, iduronic acid, idosamine or neuraminic acid, or any combination of two or more thereof; or
wherein the disaccharide comprises sucrose, lactulose, lactose, maltose, trehalose or cellobiose, or a derivative of any thereof, or any combination of two or more thereof, preferably wherein the derivative comprises chitobiose, lactosamine, sucralose or trehalosamine, or any combination of two or more thereof; or
wherein the oligosaccharide or a derivative thereof comprises a fructo-oligosaccharide or a galactooligosaccharide or a derivative thereof, or any combination of two or more thereof; or
wherein the polysaccharide comprises starch, amylose, amylopectin, chitin, pectin, cellulose, hemicellulose, glycogen, dextrin, maltodextrin, dextran or arabinoxylans, or a derivative of any thereof, or any combination of two or more thereof, preferably wherein the derivative comprises hyaluronates, dermatan sulphates, chondroitin sulphates, heparin, heparan sulphates or keratan sulphates, or any combination of two or more thereof; or
wherein the polyol comprises a sugar alcohol, preferably glycerol, lactitol, isomalt, maltitol, mannitol, xylitol, or any combination of two or more thereof.

8. A process according to any preceding claim wherein in the primary additive comprises citric acid, sodium citrate, calcium citrate, acetic acid, sodium acetate, calcium acetate or formic acid, or any combination of two or more thereof.

9. A process according to any preceding claim, wherein in the primary additive comprises sucrose, sodium gluconate, glucose, lactic acid, calcium citrate or glycerol, or a combination of two or more thereof, preferably sucrose, sodium gluconate, glucose, or glycerol, or a combination of two or more thereof, preferably sucrose, sodium gluconate or glucose, or a combination of two or more thereof.

10. A process according to any preceding claim, wherein the mixture comprises 0.001 wt% to 10 wt% of the primary additive as a percentage of the particulate material, preferably 0.005 wt% to 10 wt% of the primary additive as a percentage of the particulate material, preferably from 0.01 wt% to 5 wt% as a percentage of the particulate material, preferably, from 0.02 wt% to 3 wt% as a percentage of the particulate material.

11. A process according to any preceding claim, further comprising providing a further additive, wherein step (d) comprises mixing the particulate material, the aggregate, the primary additive and the further additive with water to form a mixture, preferably wherein the further additive comprises a bicarbonate, preferably sodium bicarbonate, potassium bicarbonate, caesium bicarbonate, magnesium bicarbonate, calcium bicarbonate, ammonium bicarbonate or carbonic acid, or any combination of two or more thereof, and/or
wherein the further additive comprises calcium nitrate and/or sodium nitrate, and/or wherein the further additive comprises a plasticizer, preferably polycarboxylate ether and/or polycarboxylate, and/or
wherein the further additive comprises fibres or nanomaterials, preferably carbon fibres, carbon nanotubes, natural fibres, plastic fibres, glass fibres, stone fibres, mineral wool fibres or steel fibres or any combination of two or more thereof.

12. A process according to any preceding claim, wherein the process comprises removing water from the mixture, preferably prior to the mixture being shaped,
preferably wherein the water is removed from the mixture at a temperature from 10°C to 80°C, preferably from 15°C to 70°C, preferably from 20°C to 60°C, preferably in the range of 30 °C to 50 °C; and/or
wherein the mixture comprises from 0.1 wt% to 60 wt% of free water, preferably from 0.5 wt% to 30 wt%, preferably from 1 wt% to 20 wt%, preferably from 1 wt% to 10 wt%, preferably from 1 wt% to 10 wt% of free water, preferably wherein the amount of water is measured prior to the carbonation step (e).

13. A process according to any preceding claim, wherein the mixture is carbonated in the presence of a gas comprising carbon dioxide concentration from to 2 vol% to 100 vol%, preferably from 5 vol% to 90 vol%, preferably from 7.5 vol % to 85 vol%, preferably from 7.5 vol% to 80 vol%, preferably from 10 vol% to 70 vol%, preferably from 20 vol% to 80 vol%; and/or
wherein the carbonation is carried out for a period of from 1 hour to 48 hours, preferably from 6 hours to 36 hours, preferably from 6 hours to 24 hours, preferably from 4 hours to 24 hours, preferably from 4 hours to 8 hours.

14. A process according to any preceding claim, wherein the mixture comprises 5% to 99
% on a dry weight basis of aggregate, preferably 10% to 80% on a dry weight basis of aggregate, preferably 5% to 60 % on a dry weight basis of aggregate, preferably 10% to 50%, preferably 15% to 40%; and/or
wherein the mixture comprises 1% to 60 % on a dry weight basis of particulate material, preferably 1% to 50%, preferably 1% to 40%, preferably 5% to 60 % on a dry weight basis of particulate material, preferably 10% to 50%, preferably 15% to 40%.

15. A process according to any preceding claim, wherein the composite is substantially cuboidal, preferably the composite is a precast product, preferably a panel, a paver, a block, a curb, a sewer, a briquette, or a slab.

## Patentansprüche

1. Verfahren zur Herstellung eines Betonverbundwerkstoffs, umfassend:
a. Bereitstellen eines Partikelmaterials, wobei das Partikelmaterial Mineralien mit einem Gehalt von mindestens 30 % (m/m) Calcium, Magnesium, Aluminium, Silicium, Kalium oder Eisen oder eine Kombination von zwei oder mehreren davon umfasst.
b. Bereitstellen eines Aggregats,
c. Bereitstellen eines primären Additivs, wobei das primäre Additiv einen Zucker oder ein Derivat davon, ein Polyol oder ein Derivat davon, eine organische Säure, die eine Carbonsäure umfasst, oder ein Salz einer organischen Säure, das ein Carboxylatsalz umfasst, oder eine beliebige Kombination von zwei oder mehreren davon umfasst, wobei die Carbonsäure enthaltende Verbindung oder die Carboxylatsalz enthaltende Verbindung Citronensäure, Natriumgluconat, Natriumcitrat, Calciumnitrat, Essigsäure, Natriumacetat, Calciumacetat, Ameisensäure, Glycerinsäure, Ascorbinsäure, Weinsäure, Oxalsäure, Äpfelsäure oder Milchsäure oder eine beliebige Kombination von zwei oder mehreren davon umfasst, wobei das primäre Additiv in Form einer Lösung, einer kolloidalen Suspension oder eines Pulvers bereitgestellt wird,
d. Mischen des Partikelmaterials, des Aggregats und des primären Additivs mit Wasser, um ein Gemisch zu bilden, wobei das Gemisch unter Verwendung einer Form oder eines Trägers geformt wird, wobei das Gemisch für einen Zeitraum von 1 s bis 2 Stunden in der Form oder auf dem Träger verbleibt und anschließend, vor Schritt (e), von der Form oder dem Träger getrennt wird, und
e. Carbonisieren des Gemischs in Gegenwart von Kohlendioxid für einen Zeitraum von 6 Stunden bis 36 Stunden, wobei die Konzentration von Kohlendioxid höher als 2 Vol.-% ist.

2. Verfahren nach Anspruch 1, wobei das Partikelmaterial:
i) ein Metalloxid, ein Metallhydroxid oder ein Metallsilicat oder eine Kombination von zwei oder mehreren davon, vorzugsweise Calciumoxid, Calciumhydroxid, ein Calciumsilicat, Magnesiumoxid, Magnesiumhydroxid, ein Magnesiumsilicat oder ein Eisensilicat oder eine beliebige Kombination von zwei oder mehr davon, vorzugsweise Calciumoxid, Calciumhydroxid, ein Calciumsilicat, Magnesiumoxid, Magnesiumhydroxid oder ein Magnesiumsilicat oder eine beliebige Kombination von zwei oder mehreren davon, umfasst, wobei das Partikelmaterial vorzugsweise Calciumoxid, Calciumhydroxid oder ein Calciumsilicat oder eine beliebige Kombination von zwei oder mehreren davon, vorzugsweise Calciumoxid oder Calciumhydroxid, umfasst, wobei das Partikelmaterial am meisten bevorzugt Calciumoxid umfasst; und/oder
ii) Hochofenschlacke, Meta-Kaolin, calcinierten Ton, Olivin, Serpentine, Portlandzement, Zement-Bypass-Staub, Kalkofenstaub, Zementofenstaub, Luftreinhaltungsrückstände, Portlandklinker, Zement, Kalksteinmehl, Branntkalk, Gesteinsfeinteile, Betonfeinteile, Bergbaurückstände, Flugasche, Rostschlacke, Biomasseasche, metallurgische Schlacke, Rotschlamm, Papierasche, Stäube, Ölschieferasche, Metallsilicatpulver, Metallhydroxidpulver, Calciumsulfat, puzzolanisches Material oder Bleicherdematerial oder eine beliebige Kombination von zwei oder mehreren davon umfasst, wobei das Partikelmaterial vorzugsweise Hochofenschlacke, Metallurgische Schlacke, Portlandzement, Portlandklinker, Zement, Luftreinhaltungsrückstände oder eine beliebige Kombination von zwei oder mehreren davon umfasst, wobei das Partikelmaterial vorzugsweise Stahlschlacke, Edelstahlschlacke, Kupferschlacke, Bleischlacke, Portlandzement, Portlandklinker, Zement, Zement-Bypass-Staub, Kalkofenstaub, Zementofenstaub, Flugasche oder Bodenasche oder eine beliebige Kombination von zwei oder mehreren davon umfasst, wobei das Partikelmaterial vorzugsweise Hochofenschlacke oder metallurgische Schlacke, vorzugsweise Stahlschlacke oder Edelstahlschlacke, umfasst; und/oder
iii) eine durchschnittliche Partikelgröße von 1 mm bis 60 mm, vorzugsweise 1 mm bis 40 mm, am meisten bevorzugt 1 mm bis 30 mm, aufweist; oder
wobei das Partikelmaterial eine durchschnittliche Partikelgröße von 0,5 pm bis 1 mm, vorzugsweise 1 µm bis 1 mm, vorzugsweise 5 µm bis 500 µm aufweist.

3. Verfahren nach Anspruch 1, wobei das Partikelmaterial ferner Aluminiumoxid, Siliciumdioxid, ein Eisenoxid, Calciumferrit, ein Aluminiumsilicat, ein Natriumsilicat, ein Kaliumsilicat, Calciumsulfat, Magnesiumsulfat, Kaliumsulfat oder Natriumsulfat oder eine beliebige Kombination von zwei oder mehreren davon umfasst, wobei das Partikelmaterial vorzugsweise ferner Aluminiumoxid, Siliciumdioxid, Eisenoxid, Calciumferrit, ein Aluminiumsilicat oder ein Natriumsilicat oder eine beliebige Kombination von zwei oder mehreren davon umfasst; und/oder

4. Verfahren nach einem der vorhergehenden Ansprüche, wobei das Aggregat Primäraggregat, Sekundäraggregat oder Recyclingaggregat, vorzugsweise Sand, Gestein, Betonfeinteile, Schlacke oder Recyclingbeton oder eine beliebige Kombination von zwei oder mehreren davon, vorzugsweise künstliches kohlendioxidnegatives Aggregat umfasst, und/oder
wobei das Aggregat eine durchschnittliche Partikelgröße von 0,1 mm bis 90 mm, vorzugsweise 0,5 mm bis 50 mm, vorzugsweise 1 mm bis 45 mm, vorzugsweise 2 mm bis 40 mm, vorzugsweise 4 mm bis 30 mm, aufweist.

5. Verfahren nach einem der vorhergehenden Ansprüche, wobei das primäre Additiv einen Zucker oder ein Derivat davon oder ein Polyol oder ein Derivat davon oder eine beliebige Kombination von zwei oder mehreren davon, vorzugsweise einen Zucker oder ein Derivat davon, umfasst.

6. Verfahren nach einem der vorhergehenden Ansprüche, wobei der Zucker oder das Derivat davon ein Monosaccharid oder ein Derivat davon, ein Disaccharid oder Derivat davon, ein Oligosaccharid oder ein Derivat davon oder ein Polysaccharid oder ein Derivat davon oder eine beliebige Kombination von zwei oder mehreren davon umfasst, wobei der Zucker oder das Derivat davon vorzugsweise ein Monosaccharid oder ein Derivat davon, ein Disaccharid oder ein Derivat davon, ein Oligosaccharid oder ein Derivat davon oder eine beliebige Kombination von zwei oder mehreren davon umfasst.

7. Verfahren nach Anspruch 6, wobei das Monosaccharid Fructose, Glucose, Galactose, Ribose, Xylose, Arabinose, Mannose oder Idose, oder ein Derivat von einem beliebigen davon, oder eine beliebige Kombination von zwei oder mehreren davon umfasst, wobei das Derivat vorzugsweise Glucuronsäure, Gluconsäure, Glucosamin, Galacturonsäure, Galactosamin, Ribonsäure, Xylonsäure, Arabinonsäure, Arabinosamin, Mannosamin, Mannonsäure, Iduronsäure, Idosamin oder Neuraminsäure oder eine beliebige Kombination von zwei oder mehreren davon umfasst; oder
wobei das Disaccharid Sucrose, Lactulose, Lactose, Maltose, Trehalose oder Cellobiose, oder ein Derivat von einem beliebigen davon, oder eine beliebige Kombination von zwei oder mehreren davon umfasst, wobei das Derivat vorzugsweise Chitobiose, Lactosamin, Sucralose oder Trehalosamin oder eine beliebige Kombination von zwei oder mehreren davon umfasst; oder wobei das Oligosaccharid oder ein Derivat davon ein Fructooligosaccharid oder ein Galactooligosaccharid oder ein Derivat davon oder eine beliebige Kombination von zwei oder mehreren davon umfasst; oder
wobei das Polysaccharid Stärke, Amylose, Amylopectin, Chitin, Pectin, Cellulose, Hemicellulose, Glycogen, Dextrin, Maltodextrin, Dextran oder Arabinoxylane, oder ein Derivat von einem beliebigen davon, oder eine beliebige Kombination von zwei oder mehreren davon umfasst, wobei das Derivat vorzugsweise Hyaluronate, Dermatansulfate, Chondroitinsulfate, Heparin, Heparansulfate oder Keratansulfate oder eine beliebige Kombination von zwei oder mehreren davon umfasst; oder
wobei das Polyol einen Zuckeralkohol, vorzugsweise Glycerin, Lactitol, Isomalt, Maltitol, Mannitol, Xylitol oder eine beliebige Kombination von zwei oder mehreren davon umfasst.

8. Verfahren nach einem der vorhergehenden Ansprüche, wobei das primäre Additiv Citronensäure, Natriumcitrat, Calciumcitrat, Essigsäure, Natriumacetat, Calciumacetat oder Ameisensäure oder eine beliebige Kombination von zwei oder mehreren davon, umfasst.

9. Verfahren nach einem der vorhergehenden Ansprüche, wobei das primäre Additiv Sucrose, Natriumgluconat, Glucose, Milchsäure, Calciumcitrat oder Glycerin oder eine Kombination von zwei oder mehreren davon, vorzugsweise Sucrose, Natriumgluconat, Glucose oder Glycerin oder eine Kombination von zwei oder mehreren davon, vorzugsweise Sucrose, Natriumgluconat oder Glucose oder eine Kombination von zwei oder mehreren davon, umfasst.

10. Verfahren nach einem der vorhergehenden Ansprüche, wobei das Gemisch 0,001 Gew.-% bis 10 Gew.-% des primären Additivs als prozentualen Anteil des Partikelmaterials, vorzugsweise 0,005 Gew.-% bis 10 Gew.-% des primären Additivs als prozentualen Anteil des Partikelmaterials, vorzugsweise 0,01 Gew.-% bis 5 Gew.-% als prozentualen Anteil des Partikelmaterials, vorzugsweise 0,02 Gew.-% bis 3 Gew.-% als prozentualen Anteil des Partikelmaterials, umfasst.

11. Verfahren nach einem der vorhergehenden Ansprüche, das ferner ein Bereitstellen eines weiteren Additivs umfasst, wobei Schritt (d) ein Mischen des Partikelmaterials, des Aggregats, des primären Additivs und des weiteren Additivs mit Wasser, um ein Gemisch zu bilden, umfasst, wobei das weitere Additiv vorzugsweise ein Bicarbonat, vorzugsweise Natriumbicarbonat, Kaliumbicarbonat, Caesiumbicarbonat, Magnesiumbicarbonat, Calciumbicarbonat, Ammoniumbicarbonat oder Kohlensäure oder eine beliebige Kombination von zwei oder mehreren davon, umfasst, und/oder
wobei das weitere Additiv Calciumnitrat und/oder Natriumnitrat umfasst, und/oder wobei das weitere Additiv einen Weichmacher, vorzugsweise Polycarboxylatether und/oder Polycarboxylat, umfasst, und/oder
wobei das weitere Additiv Fasern oder Nanomaterialien, vorzugsweise Kohlenstofffasern, Kohlenstoffnanoröhren, Naturfasern, Kunststofffasern, Glasfasern, Steinfasern, Mineralwollefasern oder Stahlfasern oder eine beliebige Kombination von zwei oder mehreren davon, umfasst.

12. Verfahren nach einem der vorhergehenden Ansprüche, wobei das Verfahren ein Entfernen von Wasser aus dem Gemisch, vorzugsweise bevor die Mischung geformt wird, umfasst, wobei das Wasser vorzugsweise bei einer Temperatur von 10 °C bis 80 °C, vorzugsweise von 15 °C bis 70 °C, vorzugsweise von 20 °C bis 60 °C, vorzugsweise im Bereich von 30 °C bis 50 °C, aus dem Gemisch entfernt wird; und/oder
wobei das Gemisch 0,1 Gew.-% bis 60 Gew.-% freies Wasser, vorzugsweise 0,5 Gew.-% bis 30 Gew.-%, vorzugsweise 1 Gew.-% bis 20 Gew.-%, vorzugsweise 1 Gew.-% bis 10 Gew.-%, vorzugsweise 1 Gew.-% bis 10 Gew.-% freies Wasser, umfasst, wobei die Menge von Wasser vor dem Carbonisierungsschritt (e) gemessen wird.

13. Verfahren nach einem der vorhergehenden Ansprüche, wobei das Gemisch in Gegenwart eines Gases carbonisiert wird, das eine Kohlendioxidkonzentration von 2 Vol.-% bis 100 Vol.-%, vorzugsweise von 5 Vol.-% bis 90 Vol.-%, vorzugsweise von 7,5 Vol.-% bis 85 Vol.-%, vorzugsweise von 7,5 Vol.-% bis 80 Vol.-%, vorzugsweise von 10 Vol.-% bis 70 Vol.-%, vorzugsweise von 20 Vol.-% bis 80 Vol.-%, umfasst; und/oder wobei die Carbonisierung für einen Zeitraum von 1 Stunde bis 48 Stunden, vorzugsweise 6 Stunden bis 36 Stunden, vorzugsweise 6 Stunden bis 24 Stunden, vorzugsweise 4 Stunden bis 24 Stunden, vorzugsweise 4 Stunden bis 8 Stunden, durchgeführt wird.

14. Verfahren nach einem der vorhergehenden Ansprüche, wobei das Gemisch 5 % bis 99 % Aggregat, bezogen auf ein Trockengewicht, vorzugsweise 10 % bis 80 % Aggregat, bezogen auf ein Trockengewicht, vorzugsweise 5 % bis 60 % Aggregat, bezogen auf ein Trockengewicht, vorzugsweise 10 % bis 50 %, vorzugsweise 15 % bis 40 %, umfasst; und/oder
wobei das Gemisch 1 % bis 60 % Partikelmaterial, bezogen auf ein Trockengewicht, vorzugsweise 1 % bis 50 %, vorzugsweise 1 % bis 40 %, vorzugsweise 5 % bis 60 % Partikelmaterial, bezogen auf ein Trockengewicht, vorzugsweise 10 % bis 50 %, vorzugsweise 15 % bis 40 %, umfasst.

15. Verfahren nach einem der vorhergehenden Ansprüche, wobei der Verbundwerkstoff im Wesentlichen quaderförmig ist, wobei der Verbundwerkstoff vorzugsweise ein vorgefertigtes Produkt, vorzugsweise eine Platte, ein Pflasterstein, ein Block, ein Bordstein, ein Abwasserrohr, ein Brikett oder eine Fliese, ist.

## Revendications

1. Procédé de production d'un béton composite comprenant :
a. la fourniture d'un matériau particulaire, dans lequel le matériau particulaire comprend des minéraux ayant une teneur d'au moins 30 % m/m de calcium, magnésium, aluminium, silicium, potassium ou fer, ou une combinaison de deux ou plus de ceux-ci.
b. la fourniture d'un agrégat,
c. la fourniture d'un additif primaire, dans lequel l'additif primaire comprend un sucre ou un dérivé de celui-ci, un polyol ou un dérivé de celui-ci, un acide organique comprenant un acide carboxylique, ou un sel d'acide organique comprenant un sel de carboxylate, ou toute combinaison de deux ou plus de ceux-ci, dans lequel le composé contenant de l'acide carboxylique ou le composé contenant un sel de carboxylate comprend de l'acide citrique, du gluconate de sodium, du citrate de sodium, du nitrate de calcium, de l'acide acétique, de l'acétate de sodium, de l'acétate de calcium, de l'acide formique, de l'acide glycérique, de l'acide ascorbique, de l'acide tartique, de l'acide oxalique, de l'acide malique ou de l'acide lactique, ou toute combinaison de deux ou plus de ceux-ci, dans lequel l'additif primaire est fourni sous la forme d'une solution, d'une suspension colloïdale ou d'une poudre,
d. le mélange du matériau particulaire, de l'agrégat et de l'additif primaire avec de l'eau pour former un mélange, dans lequel le mélange est façonné à l'aide d'un moule ou d'un support, dans lequel le mélange reste dans le moule ou sur le support pendant une période de 1 s à 2 heures et est ensuite séparé du moule ou du support avant l'étape (e), et
e. la carbonatation du mélange en présence de dioxyde de carbone pendant une période de 6 heures à 36 heures, dans lequel la concentration de dioxyde de carbone est supérieure à 2 % en volume.

2. Procédé selon la revendication 1, dans lequel le matériau particulaire :
i) comprend un oxyde métallique, un hydroxyde métallique ou un silicate métallique, ou une combinaison de deux ou plus de ceux-ci, de préférence de l'oxyde de calcium, de l'hydroxyde de calcium, un silicate de calcium, de l'oxyde de magnésium, de l'hydroxyde de magnésium, un silicate de magnésium, ou un silicate de fer ou toute combinaison de deux ou plus de ceux-ci, de préférence de l'oxyde de calcium, de l'hydroxyde de calcium, un silicate de calcium, de l'oxyde de magnésium, de l'hydroxyde de magnésium ou un silicate de magnésium ou toute combinaison de deux ou plus de ceux-ci, de préférence dans lequel le matériau particulaire comprend de l'oxyde de calcium, de l'hydroxyde de calcium ou un silicate de calcium, ou toute combinaison de deux ou plus de ceux-ci, de préférence de l'oxyde de calcium ou de l'hydroxyde de calcium, de manière préférée entre toutes le matériau particulaire comprend de l'oxyde de calcium ; et/ou
ii) comprend un laitier de haut fourneau, méta kaolin, argile calcinée, olivine, serpentin, Ciment Portland, poussière de dilution de ciment, poussière de four à chaux, poussière de four à ciment, résidu de dépollution de l'air, clinker Portland, ciment, poudre de calcaire, chaux vive, particules fines de roche, particules fines de béton, des résidus miniers, cendres volantes, cendres résiduelles, cendres de biomasse, laitier de métallurgie, boue rouge, cendres de papier, poussières, cendres de schiste bitumineux, poudre de silicate métallique, poudre d'hydroxyde métallique, sulfate de calcium, matériau pouzzolanique ou matériau de terre de blanchiment, ou toute combinaison de deux ou plus de ceux-ci, de préférence, le matériau particulaire comprend laitier de haut fourneau, laitier de métallurgie, ciment Portland, clinker Portland, ciment, résidu de dépollution de l'air ou toute combinaison de deux ou plus de ceux-ci, de préférence, le matériau particulaire comprend laitier d'acier, laitier d'acier inoxydable, laitier de cuivre, laitier de plomb, ciment Portland, clinker Portland, ciment, poussière de dilution de ciment, poussière de four à chaux, poussière de four à ciment, cendres volantes ou cendres résiduelles ou toute combinaison de deux ou plus de ceux-ci, de préférence, le matériau particulaire comprend laitier de haut fourneau ou du laitier de métallurgie, de préférence laitier d'acier ou laitier d'acier inoxydable ; et/ou
iii) a une taille de particule moyenne de 1 mm à 60 mm, de préférence de 1 mm à 40 mm, de manière préférée entre toutes de 1 mm à 30 mm ; ou
dans lequel le matériau particulaire a une taille de particule moyenne de 0,5 pm à 1 mm, de préférence de 1 pm à 1 mm, de préférence de 5 pm à 500 pm.

3. Procédé selon la revendication 1, dans lequel le matériau particulaire comprend en outre de l'oxyde d'aluminium, du dioxyde de silicium, un oxyde de fer, ferrite de calcium, un silicate d'aluminium, un silicate de sodium, un silicate de potassium, du sulfate de calcium, du sulfate de magnésium, du sulfate de potassium ou du sulfate de sodium, ou toute combinaison de deux ou plus de ceux-ci, de préférence, le matériau particulaire comprend en outre de l'oxyde d'aluminium, du dioxyde de silicium, de l'oxyde de fer, du ferrite de calcium, un silicate d'aluminium, ou un silicate de sodium, ou toute combinaison de deux ou plus de ceux-ci ; et/ou

4. Procédé selon l'une quelconque des revendications précédentes, dans lequel l'agrégat comprend un agrégat primaire, un agrégat secondaire ou un agrégat recyclé, de préférence du sable, de la roche, des particules fines de béton, du laitier ou du béton recyclé, ou toute combinaison de deux ou plus de ceux-ci, de préférence un agrégat négatif en dioxyde de carbone artificiel, et/ou
dans lequel l'agrégat a une taille de particules moyenne de 0,1 mm à 90 mm, de préférence de 0,5 mm à 50 mm, de préférence de 1 mm à 45 mm, de préférence de 2 mm à 40 mm, de préférence de 4 mm à 30 mm.

5. Procédé selon l'une quelconque des revendications précédentes, dans lequel l'additif primaire comprend un sucre ou un dérivé de celui-ci ou un polyol ou un dérivé de celui-ci ou une combinaison quelconque de deux ou plus de ceux-ci, de préférence un sucre ou un dérivé de celui-ci.

6. Procédé selon l'une quelconque des revendications précédentes, dans lequel le sucre ou le dérivé de celui-ci comprend un monosaccharide ou un dérivé de celui-ci, un disaccharide ou un dérivé de celui-ci, un oligosaccharide ou un dérivé de celui-ci ou un polysaccharide ou un dérivé de celui-ci, ou toute combinaison de deux ou plus de ceux-ci, dans lequel le sucre ou le dérivé de celui-ci comprend de préférence un monosaccharide ou un dérivé de celui-ci, un disaccharide ou un dérivé de celui-ci, un oligosaccharide ou un dérivé de celui-ci, ou toute combinaison de deux ou plus de ceux-ci.

7. Procédé selon la revendication 6, dans lequel le monosaccharide comprend fructose, glucose, galactose, ribose, xylose, arabinose, mannose ou idose, ou un dérivé de l'un quelconque de ceux-ci, ou toute combinaison de deux ou plus de ceux-ci, dans lequel le dérivé comprend de préférence de l'acide glucuronique, acide gluconique, glucosamine, acide galacturonique, galactosamine, acide ribonique, acide xylonique, acide arabinonique, arabinosamine, mannosamine, acide mannonique, acide iduronique, idosamine ou acide neuraminique, ou toute combinaison de deux ou plus de ceux-ci ; ou
dans lequel le disaccharide comprend saccharose, lactulose, lactose, maltose, tréhalose ou cellobiose, ou un dérivé de l'un quelconque de ceux-ci, ou toute combinaison de deux ou plus de ceux-ci, de préférence dans lequel le dérivé comprend chitobiose, lactosamine, sucralose ou tréhalosamine, ou toute combinaison de deux ou plus de ceux-ci ; ou dans lequel l'oligosaccharide ou un dérivé de celui-ci comprend un fructo-oligosaccharide ou un galactooligosaccharide ou un dérivé de ceux-ci, ou toute combinaison de deux ou plus de ceux-ci ; ou
dans lequel le polysaccharide comprend de l'amidon, de l'amylose, de l'amylopectine, de la chitine, de la pectine, de la cellulose, de l'hémicellulose, du glycogène, de la dextrine, de la maltodextrine, du dextrane ou des arabinoxylanes, ou un dérivé de l'un quelconque de ceux-ci, ou toute combinaison de deux ou plus de ceux-ci, dans lequel le dérivé comprend de préférence des hyaluronates, des sulfates de dermatan, des sulfates de chondroïtine, de l'héparine, des héparane sulfates ou kératane sulfates, ou toute combinaison de deux ou plus de ceux-ci ; ou
dans lequel le polyol comprend un alcool de sucre, de préférence du glycérol, du lactitol, de l'isomalt, du maltitol, du mannitol, du xylitol, ou toute combinaison de deux ou plus de ceux-ci.

8. Procédé selon l'une quelconque des revendications précédentes, dans lequel l'additif primaire comprend de l'acide citrique, du citrate de sodium, du citrate de calcium, de l'acide acétique, de l'acétate de sodium, de l'acétate de calcium ou de l'acide formique ou toute combinaison de deux ou plus de ceux-ci.

9. Procédé selon l'une quelconque des revendications précédentes, dans lequel l'additif primaire comprend du saccharose, du gluconate de sodium, du glucose, de l'acide lactique, du citrate de calcium ou du glycérol, ou une combinaison de deux ou plus de ceux-ci, de préférence du saccharose, du gluconate de sodium, du glucose ou du glycérol, ou une combinaison de deux ou plus de ceux-ci, de préférence du saccharose, du gluconate de sodium ou du glucose ou une combinaison de deux ou plus de ceux-ci.

10. Procédé selon l'une quelconque des revendications précédentes, dans lequel le mélange comprend 0,001 % en poids à 10 % en poids de l'additif primaire en tant que pourcentage du matériau particulaire, de préférence 0,005 % en poids à 10 % en poids de l'additif primaire en tant que pourcentage du matériau particulaire, de préférence 0,01 % en poids à 5 % en poids en tant que pourcentage du matériau particulaire, de préférence de 0,02 % en poids à 3 % en poids en tant que pourcentage du matériau particulaire.

11. Procédé selon l'une quelconque des revendications précédentes, comprenant en outre la fourniture d'un additif supplémentaire, dans lequel l'étape (d) comprend le mélange du matériau particulaire, de l'agrégat, de l'additif primaire et de l'additif supplémentaire avec de l'eau pour former un mélange, de préférence dans lequel l'additif supplémentaire comprend un bicarbonate, de préférence du bicarbonate de sodium, du bicarbonate de potassium, bicarbonate de césium, du bicarbonate de magnésium, du bicarbonate de calcium, bicarbonate d'ammonium ou de l'acide carbonique, ou toute combinaison de deux ou plus de ceux-ci, et/ou
dans lequel l'additif supplémentaire comprend du nitrate de calcium et/ou du nitrate de sodium, et/ou dans lequel l'additif supplémentaire comprend un plastifiant, de préférence un éther de polycarboxylate et/ou un polycarboxylate, et/ou
dans lequel l'additif supplémentaire comprend des fibres ou des nanomatériaux, de préférence des fibres de carbone, des nanotubes de carbone, des fibres naturelles, des fibres de plastique, des fibres de verre, des fibres de pierre, des fibres de laine minérale ou des fibres d'acier ou toute combinaison de deux ou plus de ceux-ci.

12. Procédé selon l'une quelconque des revendications précédentes, dans lequel le procédé comprend l'élimination de l'eau du mélange, de préférence avant le façonnage du mélange, de préférence dans lequel l'eau est éliminée du mélange à une température de 10 °C à 80 °C, de préférence de 15 °C à 70 °C, de préférence de 20 °C à 60 °C, de préférence dans la plage de 30 °C à 50 °C ; et/ou
dans lequel le mélange comprend de 0,1 % en poids à 60 % en poids d'eau libre, de préférence de 0,5 % en poids à 30 % en poids, de préférence de 1 % en poids à 20 % en poids, de préférence de 1 % en poids à 10 % en poids, de préférence de 1 % en poids à 10 % en poids d'eau libre, de préférence dans lequel la quantité d'eau est mesurée avant l'étape (e) de carbonatation.

13. Procédé selon l'une quelconque des revendications précédentes, dans lequel le mélange est carbonaté en présence d'un gaz comprenant une concentration de dioxyde de carbone de 2 % en volume à 100 % en volume, de préférence de 5 % en volume à 90 % en volume, de préférence de 7,5 % en volume à 85 % en volume, de préférence de 7,5 % en volume à 80 % en volume, de préférence de 10 % en volume à 70 % en volume, de préférence de 20 % en volume à 80 % en volume ; et/ou
dans lequel la carbonatation est effectuée pendant une période de 1 heure à 48 heures, de préférence de 6 heures à 36 heures, de préférence de 6 heures à 24 heures, de préférence de 4 heures à 24 heures, de préférence de 4 heures à 8 heures.

14. Procédé selon l'une quelconque des revendications précédentes, dans lequel le mélange comprend 5 % à 99 % sur la base du poids à sec d'agrégat, de préférence 10 % à 80 % sur la base du poids à sec d'agrégat, de préférence 5 % à 60 % sur la base du poids à sec d'agrégat, de préférence 10 % à 50 %, de préférence 15 % à 40 % ; et/ou
dans lequel le mélange comprend 1 % à 60 % sur la base du poids à sec de matériau particulaire, de préférence 1 % à 50 %, de préférence 1 % à 40 %, de préférence 5 % à 60 % sur la base du poids à sec de matériau particulaire, de préférence 10 % à 50 %, de préférence 15 % à 40 %.

15. Procédé selon l'une quelconque des revendications précédentes, dans lequel le composite est sensiblement cuboïde, de préférence le composite est un produit prémoulé, de préférence un panneau, un pavement, un bloc, un parapet, un dégorgeur, une briquette ou une dalle.
